# EUROPÄISCHE PATENTANMELDUNG

(11) **EP 3 309 198 A1**
(43) Veröffentlichungstag der Anmeldung: **18.04.2018**
(21) Anmeldenummer: 16193272.8
(22) Anmeldetag: 11.10.2016
(51) Int. Cl.: C08K 5/00, C08K 5/10, C08L 53/02

(54) **BIOBASIERTE POLYMERZUSAMMENSETZUNGEN**

(71) Anmelder: Klaus Dahleke KG, 20457 Hamburg (DE)
(72) Erfinder: Bergmann, Cristina, 21107 Hamburg (DE)
(74) Vertreter: Kossak, Sabine

(57) **Zusammenfassung**

Gegenstand der Erfindung ist eine Polymerzusammensetzung für technische Kunststoffprodukte enthaltend ein thermoplastisches Elastomer oder ein Kautschuk, oder einen Biokunstoff und einen Weichmacher, sowie die Verwendung der Polymerzusammensetzung für technische Kunststoffwaren. Die Polymerzusammensetzungen enthalten keine Weichmacher auf Basis fossiler Rohstoffe in der Polymerzusammensetzung. Trotzdem konnten überraschenderweise Polymere mit guten mechanischen,physikalischen und verbesserter VOC und FOG Eigenschaften für technische Kunststoffwaren, wie technische Gummiwaren erzielt werden.

## Beschreibung

Gegenstand der Erfindung ist eine Polymerzusammensetzung für technische Kunststoffprodukte enthaltend ein thermoplastisches Elastomer, einen Kautschuk oder einen Biokunstoff und einen Weichmacher, sowie die Verwendung der Polymerzusammensetzung für technische Kunststoffwaren.

Biokunststoffe gewinnen aufgrund eines gestiegenen Umweltbewusstseins und einer zu erwartenden Verknappung der Vorräte an fossilen Quellen, wie Erdöl und Erdgas, zunehmend an Bedeutung. Einer der häufigsten Biokunststoffe sind Polylactide (PLA). Diese werden insbesondere für Lebensmittelverpackungen, in der Landwirtschaft und im Hygienebereich eingesetzt, da in diesen Bereichen die Biokunststoffe häufig für eine einmalige Anwendung dienen und die Lebensdauer der Produkte meist kurz ist. Es gibt umfassende Forschungen um Biokunststoffe auch in Bereichen, in denen eine mehrfache Verwendung und eine längere Haltbarkeit gewünscht sind, einsetzen zu können. Insbesondere ist eine Verwendung für technische Bereiche oder Konsumprodukte wünschenswert. Polylactide basieren meist auf Mais oder Zuckerrohr. Es gibt verschiedene Arbeiten um die mechanischen Eigenschaften von PLAs zu verbessern. M. C. Coskun et al. Rubberworld.com, Oktober 2015, S. 44-46 beschreiben beispielsweise den Zusatz von Additiven, um die Flexibilität und Schlagzähigkeit zu verbessern.

Thermoplastische Elastomere sind eine technisch zunehmend wichtige Gruppe von Polymeren. Sie haben sowohl Eigenschaften von Elastomeren als auch von Thermoplasten und weisen weiche, elastische Blöcke und harte, kristallisierbare Blöcke auf. Thermoplastische Elastomere werden in verschiedenen Anwendungen eingesetzt, wie z.B. im Automobilbereich, für Consumerprodukte, für Verpackungen, für medizinische Produkte und im Baubereich. Es gibt bereits erste thermoplastische Elastomere, die biologisch abbaubar und somit ein Biokunststoff sind.

Aus der WO 2009/112438 A1 sind biologisch abbaubare Elastomere bekannt, die eine Härte (Shore A) zwischen 50 und 65 aufweisen. Die Elastomere enthalten ein thermoplastisches Polyesterurethan-Segment und ein Copolyester-Segment auf Basis eines Diolcopolymers. Die Monomere stammen aus fossilen Quellen.

Gegenstand der Erfindung ist eine Polymerzusammensetzung enthaltend
a) ein thermoplastisches Elastomer, einen Kautschuk oder einen Biokunstoff und
b) einen Weichmacher,
dadurch gekennzeichnet, dass der Weichmacher ein pflanzlicher Rohstoff oder ein Rohstoffprodukt auf Basis einer Industriepflanze ist und bevorzugt keine Weichmacher auf Basis fossiler Rohstoffe in der Polymerzusammensetzung enthalten sind.

Weitere Ausführungsformen sind Gegenstand der Unteransprüche oder nachfolgend beschrieben.

Thermoplastische Elastomere (TPE) im Sinne der Erfindung sind Polymere, die eine Kombination aus den Gebrauchseigenschaften von Elastomeren und den Verarbeitungseigenschaften von Thermoplasten haben. Die Polymere weisen gleichzeitig weiche, elastische Blöcke mit hoher Dehnbarkeit und niedriger Glasübergangstemperatur (Tg) und harte, kristallisierbare Blöcke mit geringer Dehnbarkeit auf. Die beiden Blöcke sind miteinander unverträglich, so dass sich eine Mikrophasentrennung ergibt, da die Blöcke getrennt vorliegen (Römpp online Georg Thieme Verlag KG, Stuttgart 2008, Stichwort Thermoplastisches Elastomer).

Geeignete TPEs im Sinne der Erfindung sind beispielsweise:
- TPE-O: thermoplastische Elastomere auf Olefin-Basis
- TPE-S: Styrol-Block-Copolymere, wie z.B. SBS, SEBS, SIS, SBC
- TP-NR: thermoplastischer Naturkautschuk
- TP-NBR: thermoplastischer Nitrilkautschuk
- TP-FKM: thermoplastischer Fluorkautschuk
- TP-Q: thermoplastischer Siliconkautschuk
- TPE-U: thermoplastische Polyurethane
- CPE, CPA: copolymere Polyetherester
- TPE-A: thermoplastische Elastomere auf Basis von Copolyamiden
- TPE-E: werden auch als COPE oder thermoplastischer Kautschuk bezeichnet.

Bevorzugt enthält die erfindungsgemäße Polymerzusammensetzung in einer Ausführungsform ein TPE-S. Geeignete TPE-S im Sinne der Erfindung sind z.B. ein Blockcopolymer mit der Grundstruktur Poly(Styrol- Ethylen/Butadien- -Styrol) oder Poly(Styrol-Butadien- Styrol)). Diese werden auch als S-E-B-S oder S-B-S bezeichnet. Der Polystrolblock stellt dabei den harten Teil des TPE und der Butadien den weichen, elastomeren Teil des TPE dar.

Bevorzugt enthält die erfindungsgemäße Polymerzusammensetzung in einer weiteren Ausführungsform als Kautschuk ein Ethylen-Propylen-Dien-Kautschuk (EPDM). EPDM ist ein Kautschuk der durch Terpolymerisation von Ethen mit größeren Anteilen Propylen und einem geringeren Anteil eines dritten Monomeren mit Dien-Struktur hergestellt wird. Als Dien-Monomere werden bevorzugt cis,cis-1,5-Cyclooctadien (COD), exo-Dicyclopentadien (DCP), endo-Dicyclopentadien (EDCP), 1,4-Hexadien (HX) und 5-Ethyliden-2-norbornen (ENB) eingesetzt. Bevorzugt enthält die Polymerzusammensetzung in dieser Ausführungsform ein EPDM mit 5-Ethyliden-2-norbornen als Dienmonomer.

Biokunststoffe im Sinne der Erfindung basieren zumindest teilweise auf nachwachsenden Rohstoffen oder sind biologisch abbaubar oder beides. Die Bezeichnung bezieht sich dabei auf das Polymergerüst selbst und/oder Füllstoffe und nicht auf Additive oder Weichmacher, die dem Kunststoff zugesetzt sind. Bevorzugt basieren die Biokunststoffe auf nachwachsenden Rohstoffen. Die nachwachsenden Rohstoffe stammen bevorzugt aus den nachfolgend beschriebenen Industriepflanzen oder den nachfolgend beschriebenen tierischen Fettquellen. Besonders bevorzugt sind die Biokunststoffe thermoplastische Elastomere.

Die Industriepflanze im Sinne der Erfindung ist bevorzugt ausgewählt aus der Gruppe bestehend aus Baum, Sonnenblume, Raps, Rübsen, Mais, Öllein, Jojoba, Erdnuss, Kokosnuss, Distel, Rizinus Soja, Palme, Hanf, Mohn, Olive, Zuckerrohr, Zuckerrübe und Getreide.
Tierische Fettquellen im Sinne der Erfindung sind bevorzugt ausgewählt aus Butter, Schmalz, Talg, Fett, Hering, Sardine

Bevorzugt ist der aus diesen Industriepflanzen gewonnene pflanzliche Rohstoff ein pflanzliches Öl ausgewählt aus Ligninöl, Sonnenblumenöl, Rapsöl, Rübsenöl, Maisöl, Hanföl, Olivenöl, Leinöl, Sojaöl, Palmöl, Mohnöl, Jojobaöl oder der aus diesen Industriepflanzen gewonnene pflanzliche Rohstoff ist ein Rohstoffprodukt von Stärke, Cellulose oder Lignin. Besonders bevorzugt wird ein Produkt aus Zuckerrohr oder Zuckerrübe oder ein Palmölprodukt oder ein Sonnenblumenprodukt oder Rapsprodukt als Weichmacher verwendet.

Besonders bevorzugt ist der Weichmacher in der erfindungsgemäßen Polymerzusammensetzung ein pflanzlicher Rohstoff ausgewählt aus der Gruppen I bis III mit
I) Gruppe I Fettsäureester gemäß Formel (I)
II) Gruppe II Triglyceride gemäß Formel (II) und
III) Gruppe III Dimerate auf Basis von Dimersäuren gemäß Formel (III).

Die Weichmacher der Gruppe I sind Fettsäureester gemäß der Formel (I) 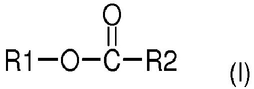 wobei
- - R1: ein substituierter oder unsubstituierter Aryl-Rest mit 1 bis 22 Kohlenstoffatomen ist, bevorzugt 1 bis 10 Kohlenstoffatomen, besonders bevorzugt ausgewählt aus der Gruppe bestehend aus substituierten und unsubstituierten Phenylresten oder ein substituierter oder unsubstituierter, linearer oder verzweigter Alkyl-Rest mit 1 bis 22 Kohlenstoffatomen, oder ein substituierter oder unsubstituierter, linearer oder verzweigter Alkylen-Rest mit 1 bis 22 Kohlenstoffatomen und ein, zwei oder drei Doppelbindungen, besonders bevorzugt einer Doppelbindung und
- - R2: ein substituierter oder unsubstituierter, linearer oder verzweigter, gesättigter oder ungesättigter aliphatischer Kohlenwasserstoffrest mit 1 bis 21 Kohlenstoffatomen ist, bevorzugt ein linearer, gesättigter oder ungesättigter aliphatischer Kohlenwasserstoffrest mit 1 bis 21 Kohlenstoffatomen, besonders bevorzugt ein linearer, ungesättigter aliphatischer Kohlenwasserstoffrest mit 1 bis 21 Kohlenstoffatomen und ein, zwei oder drei Doppelbindungen. Besonders bevorzugt ist R2 ein linearer, ungesättigter aliphatischer Kohlenwasserstoffrest mit 1 bis 17 Kohlenstoffatomen und einer Doppelbindung.

Wenn R1 ein Alkylrest ist, ist dieser bevorzugt ausgewählt aus der Gruppe bestehend aus Ethyl-, Propyl-, Butyl-, Pentyl-, Hexyl-, Heptyl-, Octyl-, 2-Ethyl-hexyl-, Nonyl-, Decyl-, Stearyl-, Oleyl- und besonders bevorzugt 2-Ethyl-hexyl, Decyl- oder Oleyl-. Wenn R1 ein Alkylenrest mit einer Doppelbindung ist, ist die Doppelbindung bevorzugt in Position 9 angeordnet.

Die Zahl der Kohlenstoffatome im Rest bezieht sich, wenn nicht anders angegeben, auf die Gesamtzahl aller Kohlenstoffatome des Restes einschließlich der Kohlenstoffatome der Substituenten und Seitengruppen.

Die Fettsäureester sind bevorzugt aus der Gruppe der Fettsäurealkylester und der Fettsäurarylester gemäß Formel (I) ausgewählt 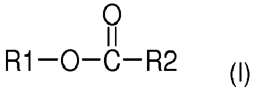 wobei
- R1: ein substituierter oder unsubstituierter, linearer oder verzweigter Alkyl-Rest mit 1 bis 22 Kohlenstoffatomen ist, bevorzugt Ethyl-, Propyl-, Butyl-, Pentyl-, Hexyl-, Heptyl-, Octyl-, 2-Ethyl-hexyl, Nonyl-, Decyl-, Stearyl- oder Oleyl- und besonders bevorzugt 2-Ethyl-hexyl, Oleyl- und Decyl- und
- R2: ein substituierter oder unsubstituierter, linearer oder verzweigter, gesättigter oder ungesättigter aliphatischer Kohlenwasserstoffrest mit 1 bis 21 Kohlenstoffatomen ist, bevorzugt ein linearer, gesättigter oder ungesättigter aliphatischer Kohlenwasserstoffrest mit 1 bis 21 Kohlenstoffatomen, besonders bevorzugt ein linearer, ungesättigter aliphatischer Kohlenwasserstoffrest mit 1 bis 21 Kohlenstoffatomen und ein, zwei oder drei Doppelbindungen. Besonders bevorzugt ist R2 ein linearer, ungesättigter aliphatischer Kohlenwasserstoffrest mit 1 bis 17 Kohlenstoffatomen und einer Doppelbindung.

Der Fettsäureester ist bevorzugt aus der Gruppe folgender Ester ausgewählt:
Alkylarachidonat,
Alkyllinoleat,
Alkyllinolenat,
Alkyllaurat,
Alkylmyristat,
Alkyloleat,
Alkylcaprat,
Alkylstearat,
Alkylpalmitat,
Alkylcaprylat,
Alkylcaproat,
Alkylbutanoat und
Alkylbehenat,
Besonders bevorzugt ist der Fettsäurealkylester 2-Ethylhexyl oleate, 2-Ethylhexylstearat, Decyloleat, Decylstearat, Oleyloleat, Oleylstearat oder eine Mischung dieser Fettsäureester..

Die Weichmacher der Gruppe II sind Triglyceride gemäß Formel (II) 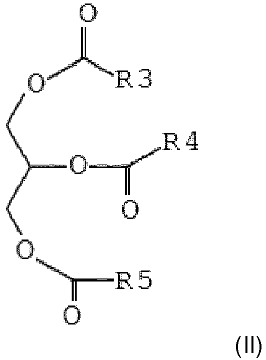 wobei R3, R4 und R5 jeweils ein substituierter oder unsubstituierter, linearer oder verzweigter Alkyl-Rest mit 1 bis 22 Kohlenstoffatomen ist, oder ein substituierter oder unsubstituierter, linearer oder verzweigter Alkylen-Rest mit 1 bis 22 Kohlenstoffatomen und ein, zwei oder drei Doppelbindungen, besonders bevorzugt einer Doppelbindung ist. Triglyceride sind Ester des Glycerols, bei denen alle drei Hydroxy-Gruppen mit Fettsäuren verestert sind.

Besonders bevorzugt sind die Reste R3, R4 und R5 identisch, bevorzugt ein Oleat-Rest, bevorzugt ein Rest mit 17 Kohlenstoffatomen mit folgender Struktur:

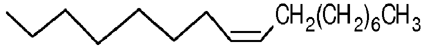

Die Weichmacher der Gruppe III sind Dimerate in Form eines Reaktionsprodukt einer Dimersäure gemäß der Formel (III) und eines geradkettigen oder verzweigten, gesättigten oder mit 1 bis 3 Kohlenstoff-Kohlenstoff-Doppelbindungen ungesättigten Alkohols mit 1 bis 22 Kohlenstoffatomen:

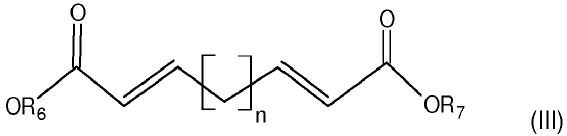

Wobei n bevorzugt eine ganze Zahl zwischen 1 und 40, bevorzugt 30, ist und R6 und R7 jeweils unabhängig voneinander ein substituierter oder unsubstituierter, linearer oder verzweigter Alkyl-Rest mit 1 bis 22 Kohlenstoffatomen sind, bevorzugt Methyl-, Ethyl-, Propyl-, Butyl-, Pentyl-, Hexyl-, Heptyl-, Octyl- , 2-Ethyl-hexyl, Nonyl-, Decyl-, Stearyl- oder Oleyl-.

Dimerate sind Ester ungesättigter Fettsäuredimere. Die dimerisierte Fettsäuren werden durch Dimerisierung der jeweiligen Fettsäure erhalten. Die Ester werden durch Umsetzung der Dimersäuren mit Alkoholen erhalten. Bevorzugt ist der Alkohol Methanol, 2-Ethylhexylalkohol, Tridecylalkohol oder Oleylalkohol.

Erfindungsgemäß können auch Mischungen verschiedener Weichmacher der Gruppen (I), (II) und (II) oder Mischungen von Weichmachern aus einer der drei Gruppen eingesetzt werden.

Die erfindungsgemäße Polymerzusammensetzung enthält in einer bevorzugten Ausführungsform
a) ein thermoplastisches Elastomer und
b) einen oder mehrere Weichmacher aus einer oder mehrerer der Gruppe I bis III.

Das thermoplastische Elastomer ist bevorzugt ein TPE-S, d.h. ein Styrol-Block-Copolymer , bevorzugt ein Styrol-Butylen-Styrol-Blockpolymer (SBS), Styrol-Butylen-Styrol-Blockcopolymer (SBS) oder ein Styrol-Ethylen/Butylen-Styrol-Blockpolymer (SEBS).

Die erfindungsgemäße Polymerzusammensetzung enthält in einer weiteren bevorzugten Ausführungsform
a) ein EPDM und
b) einen oder mehrere Weichmacher aus einer oder mehrerer der Gruppe I bis III.

Die erfindungsgemäße Polymerzusammensetzung enthält den Weichmacher bevorzugt zu 1 bis 250 Gewichtsanteilen (parts by weight), bevorzugt 5 bis 100 Gewichtsanteilen , doppeltbesonders bevorzugt 5 bis 30 Gewichtsanteilen bezogen auf das Gesamtgewicht der Polymerzusammensetzung.

Die erfindungsgemäße Polymerzusammensetzung zeichnet sich besonders durch ihre mechanischen und physikalischen Eigenschaften aus. Überraschenderweise konnten harte, schlagzähe Polymere erhalten werden, obwohl pflanzlich basierte Weichmacher als Rohstoff eingesetzt wurden. Die erfindungsgemäße Polymerzusammensetzung hat eine Härte (Shore A) von 20 bis 100, bevorzugt 30 bis 90, besonders bevorzugt 75 bis 85 gemessen nach DIN EN ISO 868.

Überraschenderweise haben die erfindungsgemäßen Polymerzusammensetzungen eine deutlich längere Bruchdehnung und gleichzeitig eine deutlich höhere Bruchspannung. Die Bruchdehung eines TPE-S gemessen nach DIN 53504 liegt bevorzugt im Bereich von > 400 %, besonders bevorzugt im Bereich zwischen 450 und 700 % und damit deutlich über der Bruchdehnung von Polymerzusammensetzungen mit mineralölbasierten Kunststoffen. Die Bruchspannung eines TPE-S gemessen nach DIN 53504 ist bevorzugt >3,5 MPa, besonders bevorzugt zwischen 4,00 und 5,00. Auch die Bruchspannung ist entsprechend besser als bei Polymerzusammensetzungen mit mineralölbasierten Kunststoffen.

Kunststoffe, die im menschennahen Bereich, beispielsweise im Haushalt oder im Automobil eingesetzt werden, dürfen nur einen maximalen Gehalt an flüchtigen organischen Verbindungen abgeben. Der Gehalt der flüchtigen organischen Verbindungen, d.h. aller gas- und dampfförmige Stoffe organischen Ursprungs in der Luft (englisch Volatile Organic Compounds) wird über den VOC-Wert angegeben. Der VOC-Wert nach VDA 278 ist die Summe der leicht- bis mittelflüchtigen Substanzen und wird als Tolouläquivalent berechnet. Grundsätzlich ist immer ein möglichst niedriger VOC-Wert wünschenswert. Ergänzend wird der Fog-Wert gemessen. Der Fog-Wert ist nach VDA 278 die Summe der schwer flüchtigen Substanzen, die ab einschließlich der Retentionszeit von n-Tetradecan eluieren. Er wird als Hexadecan-Äquivalent berechnet. Für viele Anwendungsbereiche und insbesondere im Automobilbau gibt es Grenzwerte für den VOC-Wert und Fog-Wert, die eingehalten werden müssen.

Die erfindungsgemäße Polymerzusammensetzung hat bevorzugt einen Ziel VOC-Wert < 100 µg/g gemessen nach VDA 278. Die erfindungsgemäße Polymerzusammensetzung hat weiter bevorzugt einen Ziel FOG-Wert von < 250 µg/g gemessen nach VDA 278. Die Messung der VOC-Werte und der FOG-Werte erfolgt gemäß VDA 278 mit Thermodesorptionsanalyse (TDS). Die Kalibration erfolgt mit den Bezugssubstanzen Toluol für den VOC-Wert und n-Hexadecan für den Fog-Wert.

Die erfindungsgemäße Polymerzusammensetzung wird für technische Kunststoffwaren verwendet. Die erfindungsgemäße technische Kunststoffware ist in einer Ausführungsform eine technische Gummiware. Technische Gummiwaren sind z.B. Dichtungen, Schläuche, Stoßfänger, Siebdichtungen für Scheibenwaschanlagen, Luftansaugschläuche, Faltenbälge, Lagerbuchsen, Lampendichtungen, Verbindungsstecker, Schläuche, Muffen, Membranen, Pumpen-Diaphragmen, Federungssysteme, Dämpfungselemente.

In einer weiteren Ausführungsform ist die erfindungsgemäß verwendete technische Kunststoffware ein technisches Kunststoffprodukt. Bevorzugte technische Kunststoffprodukte sind Autoinnenteile, Autoaußenteile, Weichgriffe, Sportgeräte und Sportgeräteteile, Sportzubehör, Spielzeuge und Spielzeugteile, Säuglings- und Kleinkindpflegeartikel, Werkzeuge, Werkzeugteile und Haushaltswaren.

Die erfindungsgemäße Polymerzusammensetzung enthält in einer Ausführungsform zusätzlich Additive und/oder Pigmente und/oder Füllstoffe. Additive können z.B. Vernetzungsmittel, Beschleuniger, Aktivatoren sein. Geeignete Füllstoffe sind beispielsweise organische Naturstoffe, wie z.B. Holzmehl, Holzfasern oder Cellulose, mineralische Füllstoffe, wie z.B. gemahlene Kreide, gemahlener Kalkstein, gemahlener Marmor, gefälltes Calciumcarbonat, Verstärkungsfasern, wie z.B. Glasfasern oder Glasfilamente, Kohlefasern, Textilfasern oder Naturfasern. Als Füllstoff wird erfindungsgemäß bevorzugt Calcium-carbonat oder Bariumsulfat eingesetzt.

Die Erfindung wird anhand der nachfolgenden Beispiele näher erläutert.

Es wurden unterschiedliche Weichmacher in ein TPE-S eingearbeitet. Die Rezepturen der hergestellten TPE-S sind in Tabelle 1 dargestellt. Alle Rohstoffe wurden ohne weitere Vorbehandlung eingesetzt.

**Tabelle 1: Rezepturen der hergestellten TPE-Compounds (Gewichtsanteilen (parts by weight))**

| Rohstoff (Gew.-%) | Vergleichsbeispiel A | Beispiel 1 | Beispiel 2 | Beispiel 3 |
|---|---|---|---|---|
| SEBS (Calprene^{®} H 6174 von der Firma Dynasol) | 16,61 | 16,61 | 16,61 | 16,61 |
| Paraffinischer Weichmacher auf Mineralölbasis (Pionier M 1930 von der Firma Hansen & Rosenthal KG) | 14,95 | | | |
| 2-Ethylhexyl dimerate (Radia 7121 von der Firma Oleon) | | 14,95 | | |
| Alkenes, C10-16 α-, mixed with (6E)-7,11-dimethyl-3-methylene-1,6,10-dodecatriene, tetramers and trimers, hydrogenated (Novaspec 2050 von der Firma NOVVI) | | | 14,95 | |
| Gliceryl Trioleat (Palmester 4010 von der Firma KLK Oleo) | | | | 14,95 |
| Polypropylenhomopolymer (Borealis HD 120 MO von der Firma Borealis) | 8,31 | 8,31 | 8,31 | 8,31 |
| Caiciumcarbonat (Omyacarb 5 GU von der Firma Bassermann Minerals) | 59,80 | 59,80 | 59,80 | 59,80 |
| Antioxidants (Irganox B225 der Firma BASF) | 0,33 | 0,33 | 0,33 | 0,33 |

Die Compoundierung wurde auf einem gleichsinnig drehenden Doppelschneckenextruder vom Typ ZSE 18 HPe der Firma Leistritz durchgeführt. Insgesamt wurden von allen Rezepturen Vormischungen für jeweils 1,80 kg (inkl. Kreide) Compounds hergestellt. Dazu wurden alle Komponenten mit Ausnahme der Kreide in einem Schnellmischer vorgemischt und dem Extruder gravimetrisch über den Haupteinzug zugeführt. Das Calciumcarbonat wurde gravimetrisch über eine Seitenbeschickung zugegeben. Die austretenden Schmelzestränge wurden in einem Wasserbad gekühlt und anschließend granuliert.

Es wurde ein fallendes Temperaturprofil zwischen 180 °C und 170 °C eingestellt. Die Drehzahl lag bei 400 min-1 der Gesamtdurchsatz bei 5 kg/h. Für alle Compounds war eine problemlose Compoundierung möglich.

### Plattenpressen

Es wurden Platten auf einer Plattenpresse P300 P/M der Fa. Dr. Collin GmbH bei 190 °C mit einer Vorwärmzeit von 10 min bei einem Druck von 100 bar gepresst. Direkt nach dem Pressvorgang wurde der Kühlvorgang mit einer Abkühlrate von 10 K/min bis zu einer Temperatur von 40 °C eingeleitet. Abschließend wurde die Platte im geschlossenen Werkzeug noch 14 min bei 40 °C gekühlt, um eine Verformung der Probekörper während der Öffnung des Werkzeuges zu vermeiden. Als Presswerkzeug wurde ein rundes Tauchkantenwerkzeug mit Innendurchmesser 220 mm verwendet. Die Dicke der hergestellten Platten lag bei ca. 2 mm. Weichmacher-Migration oder klebrige, schmierige Oberflächen wurden für keine der Rezepturen festgestellt.

An den gepressten Platten erfolgte die Prüfung der Härte (Shore A) gemäß DIN EN ISO 868 sowie der Dichte der Proben gemäß DIN EN ISO 1183. Ferner wurden aus den Platten Zugstäbe {S2) ausgestanzt und damit Zugversuche gemäß DIN 53504 durchgeführt. Die Messung der VOC-Werte und der FOG-Werte erfolgte gemäß VDA 278 mit Toluol (VOC und n-Hexadecan (Fog) als Bezugssubstanz. Es wurden zwei Proben genommen. Zur Bestimmung des VOC-Werts wird eine Probe 30 Minuten bei 90°C erhitzt. Zur Bestimmung des FOG-Werts wird die zweite Probe 60 Minuten bei 120°C erhitzt. Die emittierenden Substanzen werden in einer Kühlfalle kryofokusiert. Der Inhalt der Kühlfalle wird anschließend auf 280°C erhitzt und die verdampfenden Substanzen mit GC-MS analysiert. Die Ergebnisse aller Prüfungen sind in Tabelle 2 zusammengefasst.

**Tabelle 2: Eigenschaften der Compounds gemäß Tabelle 2**

| | | Vergleichsbeispiel A | Beispiel 1 | Beispiel 2 | Beispiel 3 |
|---|---|---|---|---|---|
| Härte | Shore A | 81 | 84 | 80 | 78 |
| Dichte | g/cm³ | 1,487 | 1,499 | 1,464 | 1,504 |
| Bruchspannung | MPa | 3,05 | 4,02 | 4,64 | 4,42 |
| Bruchdehnung | % | 377 | 527 | 492 | 560 |
| VOC-Wert (VDA 278) | µg/g | 86 | 164 | 96 | 41 |
| FOG-Wert (VDA 278) | µg/g | 1495 | 828 | 78 | 78 |

Überraschenderweise haben die erfindungsgemäßen Polymerzusammensetzungen eine deutlich längere Bruchdehnung und gleichzeitig eine deutlich höhere Bruchspannung. Die Bruchdehung eines TPE-S gemessen nach DIN 53504 liegt bevorzugt im Bereich von > 400 %, besonders bevorzugt im Bereich zwischen 450 und 700 % und damit deutlich über der Bruchdehnung von Polymerzusammensetzungen mit mineralölbasierten Kunststoffen. Die Bruchspannung eines TPE-S gemessen nach DIN 53504 ist bevorzugt >3,5 MPa, besonders bevorzugt zwischen 4,00 und 5,00. Auch die Bruchspannung ist entsprechend besser als bei Polymerzusammensetzungen mit mineralölbasierten Kunststoffen.

Die erfindungsgemäßen Compounds zeigen im Vergleich zu Compounds mit herkömmlichen, mineralölbasierten Weichmachern gute mechanische Eigenschaften, eine deutlich besser Bruchdehnung und Bruchspannung und niedrige VOC- und FOG-Werte.

Es wurden weiterhin unterschiedliche Weichmacher in ein EPDM eingearbeitet. Die Rezepturen der hergestellten EPDM sind in Tabelle 3a dargestellt. Alle Rohstoffe wurden ohne weitere Vorbehandlung eingesetzt.

**Tabelle 3a: Rezepturen der hergestellten EPDE-Compounds (Gewichtsanteilen (parts by weight))**

| Material | Vergleichsbeispiel B | Beispiel 4 | Beispiel 5 |
|---|---|---|---|
| EPDM (Keltan 5470 C von der Firma LANXESS Deutschland GmbH) | 100 | 100 | 100 |
| Ruß (N550 von der Firma Birla Carbon) | 120 | 120 | 120 |
| Zink Oxide (ZnO RS von der Firma Grillo Zinkoxid GmbH) | 5 | 5 | 5 |
| Stearinsäure (von der Firma NOF Corporation) | 1 | 1 | 1 |
| Beschleuniger (Rhenogran MBTS-80 von der Firma Rhein Chemie Additives) | 1 | 1 | 1 |
| Beschleuniger (Rhenogran TBzTD-70 von der Firma Rhein Chemie Additives) | 3 | 3 | 3 |
| Schwefel (Rhenogran S-80 von der Firma Rhein Chemie Additives) | 1 | 1 | 1 |
| Paraffinischer Weichmacher auf Mineralölbasis (Tudalen 12 von der Firma Hansen & Rosenthal KG) | 60 | | |
| Octadecanoic acid, 2-ethylhexyl ester (Crodamol OS-LQ von der Firma Croda) | | 65 | |
| Fatty acids, C18-unsatd., dimers, bis(2-ethylhexyl) esters (Priolube 1875 von der Firma Croda) | | | 55 |

Die untersuchten EPDM-Formulierungen sind in Tabelle 3a dargestellt. Die Verbindungen wurden in einem Innenmischer entsprechend der Mischverfahren gemäß Tabelle 3b gemischt. Die Härter (Beschleuniger und Schwefel) wurden in einer Zweiwalzenmühle bei 50 ° C zugegeben. Die resultierenden Formulierungen wurden im Rheometer Optimum bei 170 ° C vulkanisiert, um die entsprechenden EPDM-Compounds zu erhalten.

**Tabelle 3b: Mischschritte für Russ-Compounds (carbon black Compounds)**

| | |
|---|---|
| Erster Schritt: Innenmischer 50°C, 50 rpm^{a)} | |
| Mischsequenz: | 0.0 min Kautschuk |
| | 2.0 min½ Russ + ½ Öl^{b)} + Zinkoxid + Stearinsäure |
| | 4.0 min ½ Russ + ½ Öl^{b)} |
| | 7.0 min sweep |
| | 10.0 min dump |
| Zweiter Schritt (nach 24h bei 23°C): offenen Walze, 20°C, 10/10 rpm^{a)} | |
| Mischsequenz: 0.0 min Vulkanisationsmittel und Beschleuniger 6.0 min Cross blend und sheet off | |

| | |
|---|---|
| ^{a)} rpm - (rotation per minute) Umdrehungen pro Minute ^{b)} Paraffinischer Weichmacher auf Mineralölbasis, Octadecanoicsäure(Stearinsäure), 2-Ethylhexylester oder Fettsäure, C18-ungesätt., dimers, bis(2-ethylhexyl) ester | |

### Prüfmethoden

### 1. Vulkanisationsverhalten

Das Vulkanisationsverhalten z.B. die Härtungszeiten T50, T90 und der Parameter "Fmin-Fmax [dNm]") wurden bei 170 ° C nach DIN 53529 (Teil 3) unter Verwendung eines Alpha Technologies Rheometer MDR 2000.2 bestimmt.

### 2. Mooneyviskosität

Die Mooneyviskosität z.B. die Parameters "I-Value [MU]" and "ML (1+4) [MU]") wurden bestimmt gemäß DIN 53523/3 bei 100°C unter Verwendung eines Kautschukprüfgeräts (Rubber Process Analyzer) MV 2000.

### 3. Härte

Die Härte (Shore A) wurde vor und nach Alterung der Proben an der Luft für 72h bei 100°C bestimmt gemäß DIN ISO 7619-1 unter Verwendung eines Zwick 3114/5 Gerät (Shore A).

### 4. Mechanische Eigenschaften

Die mechanischen Eigenschaften (Bruchdehnung, Bruchspannung und 100% Modulus) wurden gemessen gemäß DIN 53504 (unter Verwendung eines Zwick Prüfgeräts, Zwick/ Roell Material-Prüfmaschine BT1-FR005TH.A50). Die Rückprallelastizität wurde bestimmt gemäß DIN 53512 (unter Verwendung Zwick 5109). Die Zugfestigkeit wurde bestimmt gemäß DIN 34-1:2004.

### 5. Druckverformungsrest (DVR)

Der Druckverformungsrest wurde gemäß DIN ISO 815 gemessen. Die Tests wurden bei verschieden Temperaturen durchgeführt.

### 6. Verdampfungsverlust

Die Kautschukmischungen wurden 7 Tagen bei 130°C gelagert. Die Proben wurden vorher und nachher gewogen. Der Verdampfungsverlust wird in Massen-Prozent berechnet.

Die Ergebnisse aller Prüfungen sind in Tabelle 4 zusammengefasst.

**Tabelle 4: Eigenschaften der Polymerzusammensetzungen gemäß Tabelle 3**

| Eigenschaft | Einheit | Beispiel B | Beispiel 4 | Beispiel 5 |
|---|---|---|---|---|
| Mooneyviskosität, 100°C (ML 1+4) | MU | 71 | 86 | 68 |
| | | | | |
| Mooney Scorch bei 130°C | MU | | | |
| T5 | min | 13 | 12 | 13 |
| T35 | min | 19 | 18 | 20 |
| | | | | |
| Rheomether 2000, 170°C | | | | |
| Fmin | dNm | 1,9 | 2,6 | 1,9 |
| Fmax | dNm | 15,4 | 15,6 | 13,9 |
| Fmax-Fmin | dNm | 13,5 | 13,0 | 12,0 |
| ts2 | min | 3,4 | 3,2 | 3,3 |
| t10 | min | 3,1 | 2,9 | 3,0 |
| t50 | min | 5,3 | 5,0 | 5,0 |
| t90 | min | 10,5 | 9,8 | 8,9 |
| t90-t10 | min | 7,4 | 6,9 | 5,9 |
| | | | | |
| Vulkanisation t90 x 1,5 bei 170°C | | | | |
| Härte | Shore A | 75 | 78 | 76 |
| Dehnung | % | 360 | 270 | 340 |
| Zugfestigkeit | MPa | 16 | 15 | 16 |
| Modulus 100 | MPa | 6 | 6 | 6 |
| DVR 22h 4°C | % | 5 | 4 | 6 |
| DVR 22h 100°C | % | 13 | 12 | 14 |
| DVR 22h 125°C | % | 50 | 45 | 52 |
| Alterung 72h bei 100°C | | | | |
| Härte | Shore A | 77 | 80 | 78 |
| Änderung in Härte | % | 3 | 3 | 3 |
| Dehnung | % | 280 | 260 | 310 |
| Änderung in Dehnung | % | -22 | -4 | -9 |
| Zugfestigkeit | MPa | 16 | 16 | 17 |
| Änderung in Zugfestigkeit | % | -3 | 10 | 7 |
| Modulus 100 | MPa | 7 | 7 | 7 |
| Änderung in Zugfestigkeit | % | 18 | 16 | 25 |
| | | | | |
| Loss oil - Storage 7 Tagen bei 130°C | % | 11 | 8 | 3 |

Die folgenden Eigenschaften wurden verbessert:
- Es ist sehr deutlich zu erkennen, dass die Weichmacher in den erfindungsgemäßen Polymerzusammensetzungen zu einer schnellen, aber handhabbar Vulkanisationszeit (t90-t10) führen, was die Kostensenkung bei der Herstellung von Gummiartikeln ermöglicht.
- Die Alterungseigenschaften der EPDM-Verbindungen mit den erfindungsgemäßen Weichmachern wurden verbessert (siehe Änderungen in Dehnung und Zugfestigkeit). Als Folge wird die Lebensdauer der technischen Kunststoffprodukte gemäß der vorliegenden Erfindung erhöht.
- Der Ölverlust nach einer Lagerung bei 130 ° C für 7 Tage ist dramatisch niedriger. Je geringer der Verdampfungsverlust eines Öles ist, desto stabiler sind seine Viskositätseigenschaften, seine physikalischen Eigenschaften und seine Härte nach längerer Lagerzeit.
- Die Druckverformungstests im Falle von Beispiel 4 zeigen, dass die Werte bei 4 ° C und 100 ° C den Werten von Vergleichsbeispiel B vergleichbar sind. Der Wert für 125 ° C ist deutlich niedriger als bei Vergleichsbeispiel B. Je niedriger der Wert, desto besser wiedersteht das Material dauerhafter Verformung unter einer definierten Ablenkung und Temperatur.

## Patentansprüche

1. Polymerzusammensetzung enthaltend
a) ein thermoplastisches Elastomer, ein Kautschuk oder einen Biokunstoff und
b) einen Weichmacher,
**dadurch gekennzeichnet, dass** der Weichmacher ein pflanzlicher Rohstoff oder ein Rohstoffprodukt auf Basis einer Industriepflanze oder auf Basis einer tierischen Fettquelle ist.

2. Polymerzusammensetzung nach Patentanspruch 1, **dadurch gekennzeichnet, dass** die Industriepflanze ausgewählt ist aus der Gruppe bestehend aus Bäumen, Sonnenblume, Raps, Rübsen, Mais, Öllein, Jojoba, Erdnuss, Kokosnuss, Distel, Rizinus, Soja, Palme, Hanf, Mohn, Olive, Zuckerrohr, Zuckerrübe oder Getreide und dass die tierische Fettquelle ausgewählt aus Butter, Schmalz, Talg, Fett, Hering und Sardine ist.

3. Polymerzusammensetzung nach Patentanspruch 1 oder 2, **dadurch gekennzeichnet, dass** der pflanzliche Rohstoff ein pflanzliches Öl ausgewählt aus Ligninöl, Sonennblumenöl, Rapsöl, Rübsenöl, Maisöl, Hanföl, Olivenöl, Leinöl, Sojaöl, Palmöl, Mohnöl oder der pflanzliche Rohstoff ein Rohstoffprodukt von Stärke, Cellulose oder Lignin ist, besonders ein Produkt aus Zuckerrohr oder Zuckerrübe ist, bevorzugt Palmöl oder ein Produkt aus Zuckerrohr oder ein Sonnenblumenprodukt oder Rapsprodukt.

4. Polymerzusammensetzung nach einem der vorhergehenden Patentansprüche, **dadurch gekennzeichnet, dass** der Weichmacher aus dem pflanzlichen Rohstoff ausgewählt ist aus den Gruppen I bis III mit
Gruppe I: Fettsäureester gemäß Formel (I)
Gruppe II: Triglyceride gemäß Formel (II) und
Gruppe III: Dimerate gemäß Formel (III),
wobei die Weichmacher aus der Gruppe I Fettsäureester gemäß der Formel (I) sind 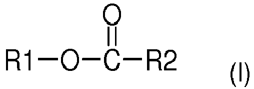 mit
- R1 ein substituierter oder unsubstituierter Aryl-Rest mit 1 bis 22 Kohlenstoffatomen, oder ein substituierter oder unsubstituierter, linearer oder verzweigter Alkyl-Rest mit 1 bis 22 Kohlenstoffatomen, oder ein substituierter oder unsubstituierter, linearer oder verzweigter Alkylen-Rest mit 1 bis 22 Kohlenstoffatomen und ein, zwei oder drei Doppelbindungen und
- R2 ein substituierter oder unsubstituierter, linearer oder verzweigter, gesättigter oder ungesättigter aliphatischer Kohlenwasserstoffrest mit 1 bis 21 Kohlenstoffatomen ist, bevorzugt ein linearer, ungesättigter aliphatischer Kohlenwasserstoffrest mit 1 bis 21 Kohlenstoffatomen und ein, zwei oder drei Doppelbindungen, oder
wobei die Weichmacher aus der Gruppe II Triglyceride gemäß Formel (II) sind 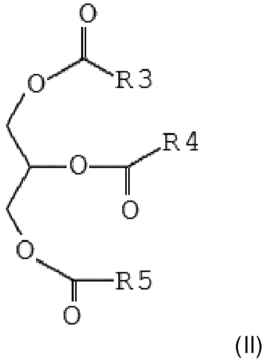
mit R3, R4 und R5 ein substituierter oder unsubstituierter, linearer oder verzweigter Alkyl-Rest mit 1 bis 22 Kohlenstoffatomen oder ein substituierter oder unsubstituierter, linearer oder verzweigter Alkylen-Rest mit 1 bis 22 Kohlenstoffatomen und ein, zwei oder drei Doppelbindungen, oder
wobei die Weichmacher der Gruppe III sind Dimerate in Form eines Reaktionsprodukt einer Dimersäure gemäß der Formel (III) und eines geradkettigen oder verzweigten, gesättigten oder mit 1 bis 3 Kohlenstoff-Kohlenstoff-Doppelbindungen ungesättigten Alkohols mit 1 bis 22 Kohlenstoffatomen: 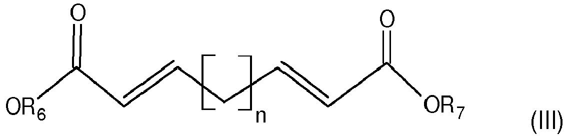
wobei n bevorzugt eine ganze Zahl zwischen 1 und 40, bevorzugt 30, ist und
R6 und R7 unabhängig voneinander ein substituierter oder unsubstituierter, linearer oder verzweigter Alkyl-Rest mit 1 bis 22 Kohlenstoffatomen sind, bevorzugt Mthyl-, Ethyl-, Propyl-, Butyl-, Pentyl-, Hexyl-, Heptyl-, Octyl- , 2-Ethyl-hexyl, Nonyl-, Decyl-, Stearyl- oder Oleyl- ist.

5. Polymerzusammensetzung nach einem der vorhergehenden Patentansprüche, **dadurch gekennzeichnet, dass** das thermoplastische Elastomer ein TPE-S, d.h. ein Styrol-Block-Copolymere, bevorzugt Styrol-Butylen-Styrol-Blockpolymer (SBS), Styrol-Butylen-Styrol (SBS) oder ein Styrol-Ethylen/Butylen-Styrol-Blockpolymer (SEBS), ist.

6. Polymerzusammensetzung nach einem der Patentansprüche 1 - 4, **dadurch gekennzeichnet, dass** der biobasierte Kautschuk ein Ethylen-Propylen-Dien-Kautschuk (EPDM) ist, bevorzugt ein EPDM mit 5-Ethyliden-2-norbornen als Monomer.

7. Polymerzusammensetzung nach einem der vorhergehenden Patentansprüche, **dadurch gekennzeichnet, dass** der Weichmacher zu 1 bis 250 Gewichtsanteilen, bevorzugt 50 bis 100 Gewichtsanteilen, besonders bevorzugt 5 bis 30 Gew.-% in der Polymerzusammensetzung enthalten ist bezogen auf das Gesamtgewicht der Polymerzusammensetzung.

8. Polymerzusammensetzung nach einem der vorhergehenden Patentansprüche, **dadurch gekennzeichnet, dass** die Polymerzusammensetzung eine Härte (Shore A) von 20 bis 100, bevorzugt 30 bis 90. Besonders bevorzugt 75 bis 85 gemessen nach DIN EN ISO 868 hat.

9. Polymerzusammensetzung nach einem der vorhergehenden Patentansprüche, **dadurch gekennzeichnet, dass** die Polymerzusammensetzung einen Ziel-VOC-Wert von < 100 µg/g gemessen nach VDA 278 hat.

10. Polymerzusammensetzung nach einem der vorhergehenden Patentansprüche, **dadurch gekennzeichnet, dass** die Polymerzusammensetzung einen FOG-Wert von < 250 µg/g gemessen nach VDA 278 hat.

11. Polymerzusammensetzung nach einem der vorhergehenden Patentansprüche, **dadurch gekennzeichnet, dass** keine Weichmacher auf Basis fossiler Rohstoffe in der Polymerzusammensetzung enthalten sind.

12. Verwendung einer Polymerzusammensetzung gemäß einer der vorhergehenden Ansprüche zur Herstellung technischer Kunststoffwaren.

13. Verwendung gemäß Patentanspruch 12, **dadurch gekennzeichnet, dass** die technische Kunststoffware eine technische Gummiware oder ein technisches Kunststoffprodukt ist.
